# EUROPEAN PATENT SPECIFICATION

(11) **EP 4 261 141 B1**
(45) Date of publication and mention of the grant of the patent: **27.11.2024**
(21) Application number: 22871103.2
(22) Date of filing: 31.07.2022
(51) Int. Cl.: B65B 35/38, B65B 35/44, B65B 59/00, B65G 47/26, B65B 65/02, B65G 47/32, B65G 47/52, B65B 5/06

(54) **SYNCHRONOUS SPACING-CHANGING CONVEYOR DEVICE AND BLISTER CARTONING INTEGRATED MACHINE USING THE SAME**
SYNCHRONE ABSTANDSÄNDERUNGSFÖRDERVORRICHTUNG UND INTEGRIERTE BLISTERKARTONIERMASCHINE, DIE DIESE VERWENDET
DISPOSITIF DE CONVOYEUR À CHANGEMENT D'ESPACEMENT SYNCHRONE ET MACHINE INTÉGRÉE D'ENCARTONNAGE DE BLISTER L'UTILISANT

(30) Priority: 28.02.2022 CN 202210186906
(43) Date of publication of application: 18.10.2023
(73) Proprietor: ZHEJIANG HOPING MACHINERY CO., LTD., Wenzhou, Zhejiang 325200 (CN)
(72) Inventor: LI, Wenlei, Wenzhou, Zhejiang 325200 (CN); LI, Junjie, Wenzhou, Zhejiang 325200 (CN); GUO, Fangting, Wenzhou, Zhejiang 325200 (CN); YANG, Yifu, Wenzhou, Zhejiang 325200 (CN)
(74) Representative: Bayramoglu et al.
(86) International application number: PCT/CN2022/109327
(87) International publication number: WO 2023/159878

(56) References cited:
- CN-A- 106 584 816
- CN-A- 111 017 303
- CN-A- 111 114 907
- CN-A- 111 688 963
- CN-A- 111 688 963
- CN-A- 111 776 438
- CN-A- 111 824 681
- CN-A- 112 109 966
- CN-A- 113 023 003
- CN-A- 114 516 449
- CN-U- 214 358 915
- CN-U- 215 664 348
- US-A1- 2021 268 714
- US-B1- 6 439 631

## Description

### TECHNICAL FIELD

The present disclosure relates to a machine for packaging a medical article, and in particular, to a synchronous spacing-changing conveyor device and a blister cartoning integrated machine using the same.

### BACKGROUND

In pharmaceutical packaging and packaging technological process, and particularly in linkage packaging from blister packaging to cartoning for liquid preparations (prefilled syringes, penicillin bottles, and ampoule bottles), how to realize high-speed integrated linkage operation between the preceding blister packaging machine (for blister forming and packaging) and the following cartoning machine (for blister cartoning) in a relatively compact pharmaceutical packaging workshop has become a technical problem to the current core process in the pharmaceutical packaging industry. According to original solutions, plastic blister supports packaged by a blister packaging machine are conveyed to a hopper of a cartoning machine through a conveyor belt or to a feeding station of the cartoning machine through a conveyor chain. For the former method combined with the conveyor belt and the hopper, the plastic blister supports are conveyed forward by a frictional force of the conveyor belt. In this process, the plastic blister supports have a slipping phenomenon on the conveyor belt. Particularly in the high-speed conveying process, due to the frictional force and inertial slipping, the plastic blister supports cannot accurately enter the feeding region of the hopper in the cartoning machine. Hence, large-scale synchronous linkage integrated packaging cannot be effectively realized. For the latter method using the conveyor chain, the conveyor chain usually uses a synchronous belt as a conveying base material. Stops are equidistantly provided on a surface of the synchronous belt to form the annular conveyor chain. In case of a specification change in the preceding blister packaging, after a production batch and a packaging specification are changed, spacings between the plastic blister supports packaged by the blister packaging machine are not always the same, and the number of trimmed blister plastic supports also changes with an actual size of medicines, such that the whole conveyor chain is to be replaced. Moreover, the conventional conveyor chain using the synchronous belt that is difficult to be replaced needs to be calibrated for its origin in each replacement. This is inconvenient for the large-scale synchronous integrated linkage production in the pharmaceutical packaging and hardly adaptable to the integrated linkage packaging technological process in the whole pharmaceutical industry. US2021/268714A1 discloses a pitch changing device, a molding device having the same and a molding method capable of addressing diverse pitches between preforms. The pitch changing device includes N holding units capable of holding the preforms and arranged at a predetermined pitch in a predetermined direction, N being an integer equal to or larger than 2; a coupling unit coupling the holding units adjacent to each other such that the pitch is changeable; drive unit configured to generate a predetermined drive force; and a drive force transmission unit configured to transmit the drive force to each of one end-side and the other end-side, in the predetermined direction, of the coupled N holding units, in which the one end-side and the other end-side are configured to be moved in the predetermined direction by the drive force to change the pitch.

### SUMMARY

In view of shortages in the prior art, the present disclosure provides a synchronous spacing-changing conveyor device for realizing spacing-changing conveyance and a blister cartoning integrated machine using the synchronous spacing-changing conveyor device.

A synchronous spacing-changing conveyor device includes a base, where a first slideway and a second slideway are provided side by side on the base; a plurality of first sliding seats are slidably provided on the first slideway; a first tray is provided on each of the first sliding seats; a plurality of second sliding seats are slidably provided on the second slideway; a second tray is provided on each of the second sliding seats; the first sliding seat is connected to a first hinge shaft with a rotation axis provided on the first sliding seat (311); two cross-connecting rods are hinged crosswise on the first hinge shaft; the second sliding seat is connected to a second hinge shaft with a rotation axis provided on the second sliding seat (312); two cross-connecting rods are hinged crosswise on the second hinge shaft; cross-connecting rods on two adjacent first sliding seat and second sliding seat are hinged crosswise in one-to-one correspondence; one of the first sliding seats is connected to a first transmission belt; the first transmission belt is in transmission connection with a first power source; one of the second sliding seats is connected to a second transmission belt; and the second transmission belt is in transmission connection with a second power source.

Preferably, a first supporting seat is provided on the first sliding seat; the first tray is provided on the first supporting seat; a first locating pin is provided on the first supporting seat; a first locating hole for allowing the first locating pin to insert into is formed in the first tray; a second supporting seat is provided on the second sliding seat; the second tray is provided on the second supporting seat; a second locating pin is provided on the second supporting seat; and a second locating hole for allowing the second locating pin to insert into is formed in the second tray.

Preferably, a first locating fixture is provided on the first supporting seat; a first locating groove for allowing the first locating fixture to enter is formed at a bottom of the first tray; a second locating fixture is provided on the second supporting seat; and a second locating groove for allowing the second locating fixture to enter is formed at a bottom of the second tray.

A blister cartoning integrated machine includes a blister packaging machine and a cartoning machine, where the blister packaging machine includes a discharging grid conveyor device for conveying packaged blisters out through the discharging grid conveyor device; the synchronous spacing-changing conveyor device is provided in front of the discharging grid conveyor device; a blister discharging transfer manipulator for transferring blisters on the discharging grid conveyor device to the synchronous spacing-changing conveyor device is provided above the discharging grid conveyor device; the blister discharging transfer manipulator includes a discharging vacuum nozzle; the cartoning machine comprises a feeding grid conveyor device for transferring packaged blisters from the synchronous spacing-changing conveyor device to the cartoning station of the cartoning machine for cartoning; the synchronous spacing-changing conveyor device is provided side by side with the feeding grid conveyor device; a blister feeding transfer manipulator for transferring blisters on the synchronous spacing-changing conveyor device to the feeding grid conveyor device is provided above the feeding grid conveyor device; and the blister feeding transfer manipulator includes a feeding vacuum nozzle.

Preferably, the discharging grid conveyor device includes a conveyor rack, a grid plate, first pushing plates, a first pushing plate transmission mechanism, and a pushing power source; the grid plate is provided with a feeding channel; the first pushing plates each are provided with a pushing portion capable of being located in the feeding channel; the first pushing plate transmission mechanism includes a first conveyor belt; the first pushing plates are connected to the first conveyor belt; and the first conveyor belt is in transmission connection with the pushing power source, such that during operation blisters fall into the feeding channel of the grid plate, the pushing power source is configured to drive the first conveyor belt to move, the first conveyor belt is configured to drive the first pushing plates to move, and the pushing portions of the first pushing plates are configured to push the blisters in the feeding channel of the grid plate to move forward.

Preferably, the discharging grid conveyor device includes second pushing plates and a second pushing plate transmission mechanism; the second pushing plates and the first pushing plates are arranged at intervals; the second pushing plates each are provided with a pushing portion capable of being located in the feeding channel; the second pushing plate transmission mechanism includes a second conveyor belt; the second conveyor belt is provided side by side with the first conveyor belt; the second pushing plates are connected to the second conveyor belt; and the second conveyor belt is in transmission connection with the pushing power source, such that during operation blisters fall into the feeding channel of the grid plate, the pushing power source is configured to drive the second conveyor belt to move, the second conveyor belt (14) is configured to drive the second pushing plates (12) to move, and the pushing portions of the second pushing plates (12) are configured to push the blisters (C) in the feeding channel (150) of the grid plate (15) to move forward.

Preferably, an end of each of the second pushing plates and the first pushing plates is connected to a roller, and a roller walkway for allowing the roller to move is provided on the conveyor rack, such that the rollers are configured to move on the roller walkway while the pushing plates move.

Preferably, the discharging vacuum nozzle of the blister discharging transfer manipulator is provided on a rotating power source.

Preferably, the blister feeding transfer manipulator is configured to track blister suction and placement for realizing continuous conveyance between the synchronous spacing-changing conveyor device and the feeding grid conveyor device.

The synchronous spacing-changing conveyor device provided by the present disclosure can realize spacing-changing conveyance. Therefore, the blister cartoning integrated machine using the synchronous spacing-changing conveyor device realizes linkage more conveniently.

### BRIEF DESCRIPTION OF THE DRAWINGS

FIG. 1 is a partial schematic view of a blister cartoning integrated machine according to the present disclosure;
FIG. 2 is a partial front view of a blister cartoning integrated machine according to the present disclosure;
FIG. 3 is a stereoscopic view of a synchronous spacing-changing conveyor device;
FIG. 4 is a front view of a synchronous spacing-changing conveyor device;
FIG. 5 is an exploded view of a synchronous spacing-changing conveyor device;
FIG. 6 illustrates a spacing changing process of a synchronous spacing-changing conveyor device (a top view);
FIG. 7 illustrates a spacing changing process of a synchronous spacing-changing conveyor device (an internal structure);
FIG. 8 illustrates a process of blisters from a blister packaging machine to a synchronous spacing-changing conveyor device and then to a cartoning machine;
FIG. 9 is a stereoscopic view of a discharging grid conveyor device; and
FIG. 10 is a partial enlarged view of A in FIG. 9.

### DETAILED DESCRIPTION OF THE EMBODIMENTS

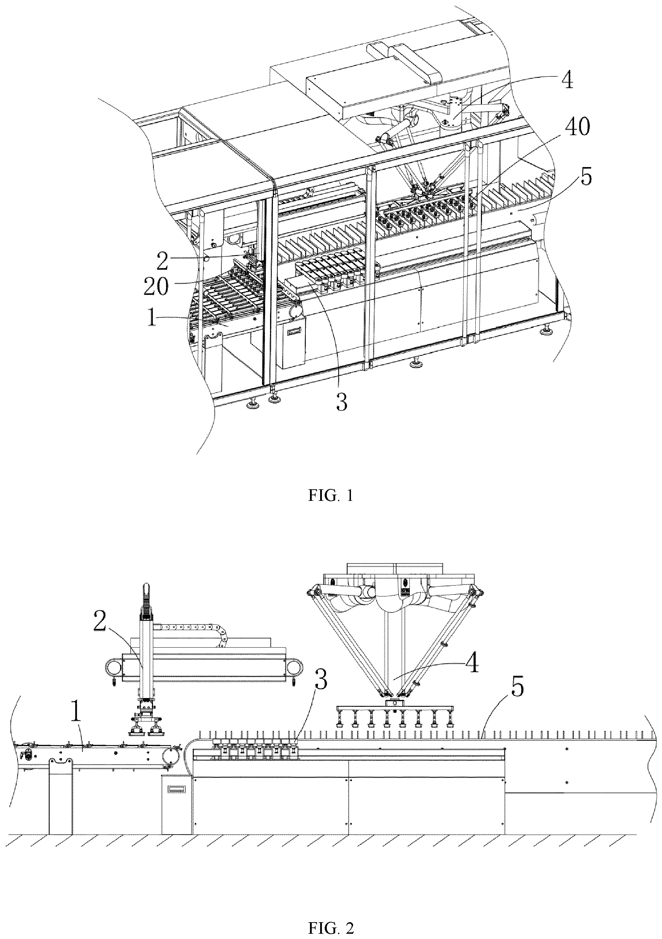

As shown in FIG. 1 and FIG. 2, a blister cartoning integrated machine includes a blister packaging machine and a cartoning machine. The blister packaging machine includes discharging grid conveyor device 1. The blister packaging machine packages articles (such as prefilled syringes, penicillin bottles, and ampoule bottles) into blisters, and then conveys the blisters out through the discharging grid conveyor device 1.

The cartoning machine includes feeding grid conveyor device 5. Packaged blisters are placed onto the feeding grid conveyor device 5, and conveyed by the feeding grid conveyor device 5 to a cartoning station of the cartoning machine for cartoning (carton packaging). The discharging grid conveyor device 1 has a different grid spacing from the feeding grid conveyor device. For the sake of matching between the two devices, synchronous spacing-changing conveyor device 3 is provided in front of the discharging grid conveyor device 1. The synchronous spacing-changing conveyor device 3 is provided side by side with the feeding grid conveyor device 5. Blister discharging transfer manipulator 2 for transferring blisters on the discharging grid conveyor device 1 to the synchronous spacing-changing conveyor device 3 is provided above the discharging grid conveyor device 1. The blister discharging transfer manipulator 2 includes discharging vacuum nozzle 20. Blister feeding transfer manipulator 4 for transferring blisters on the synchronous spacing-changing conveyor device 3 to the feeding grid conveyor device 5 is provided above the feeding grid conveyor device 5. The blister feeding transfer manipulator 4 includes feeding vacuum nozzle 40.

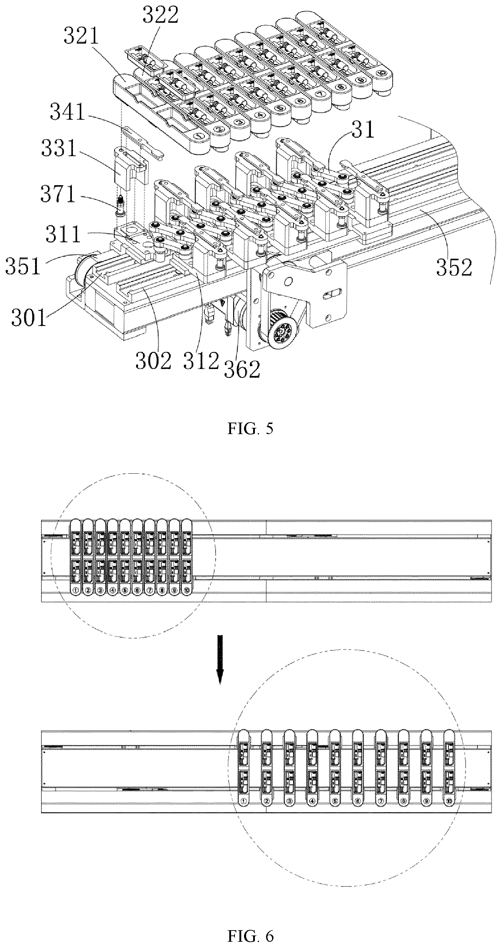

The blister cartoning integrated machine has the following working principle: Blisters are conveyed out from the discharging grid conveyor device 1 of the blister packaging machine. The blister discharging transfer manipulator 2 sucks the blisters on the discharging grid conveyor device 1 through the discharging vacuum nozzle 20, and transfers them to the synchronous spacing-changing conveyor device 3. While moving forward, the synchronous spacing-changing conveyor device 3 changes a spacing between the blisters (as shown in FIG. 6), until the spacing is the same as the spacing of the feeding grid conveyor device 5. The blister feeding transfer manipulator 4 sucks the blisters on the synchronous spacing-changing conveyor device 3 through the feeding vacuum nozzle 40, and transfers them to the feeding grid conveyor device 5. The feeding grid conveyor device 5 transfers the blisters to the cartoning station of the cartoning machine for cartoning. With the synchronous spacing-changing conveyor device, the present disclosure can greatly improve the linkage production efficiency between the blister packaging machine and the cartoning machine, and solves the problem of hard matching between blister packaging and cartoning in a specification change.

Both the blister packaging machine and the cartoning machine are the prior art (refer to the patent application No. 201520906465.3). The blister discharging transfer manipulator is also the prior art (refer to the patent application No. 201910076327.X, in which the structure is the same, but the material to be sucked is different). The blister feeding transfer manipulator is also the prior art (refer to the patent application No. 202120863286.1). The blister cartoning integrated machine is novel for the synchronous spacing-changing conveyor device and the linkage layout using the synchronous spacing-changing conveyor device.

The following descriptions are made to the structure and working principle of the synchronous spacing-changing conveyor device 3.

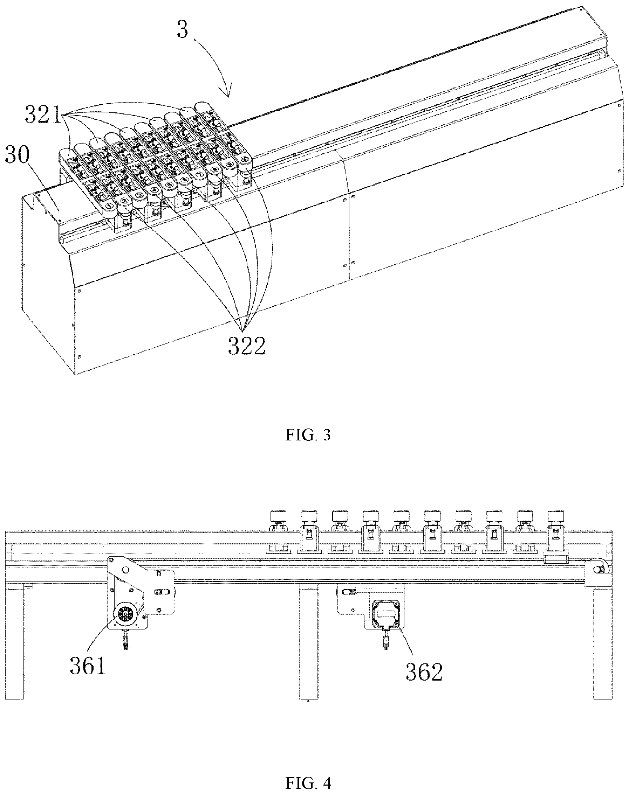

As shown in FIG. 3, the synchronous spacing-changing conveyor device 3 includes base 30. As shown in FIG. 5, first slideway 301 and second slideway 302 are provided side by side on the base 30. A plurality of first sliding seats 311 are slidably provided on the first slideway 301. First tray 321 (the first tray 321 is provided with a placement groove into which a blister can be placed) is provided on each of the first sliding seats 311. A plurality of second sliding seats 312 are slidably provided on the second slideway 302. Second tray 322 (the second tray 321 is provided with a placement groove into which a blister can be placed) is provided on each of the second sliding seats 312. The first sliding seat 311 is connected to a hinge shaft. Two cross-connecting rods 31 are hinged crosswise on the hinge shaft. The second sliding seat 312 is also connected to a hinge shaft. Two cross-connecting rods 31 are hinged crosswise on the hinge shaft. Cross-connecting rods 31 on two adjacent first sliding seat 311 and second sliding seat 312 are hinged crosswise in one-to-one correspondence (to form a scissor-type structure). One of the first sliding seats 311 is connected to first transmission belt 351. The first transmission belt 351 is in transmission connection with first power source 361. One of the second sliding seats 312 is connected to second transmission belt 352. As shown in FIG. 4, the second transmission belt 352 is in transmission connection with second power source 362.

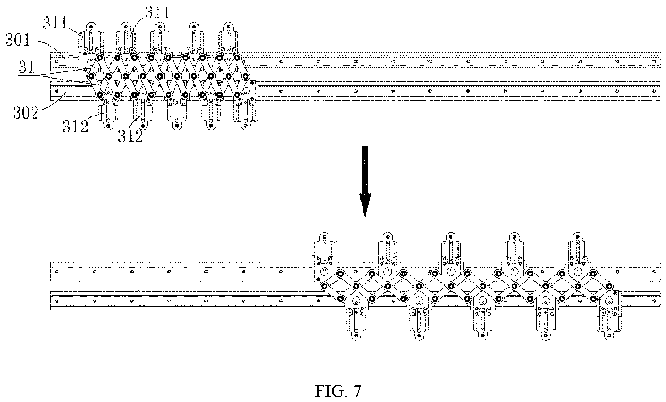

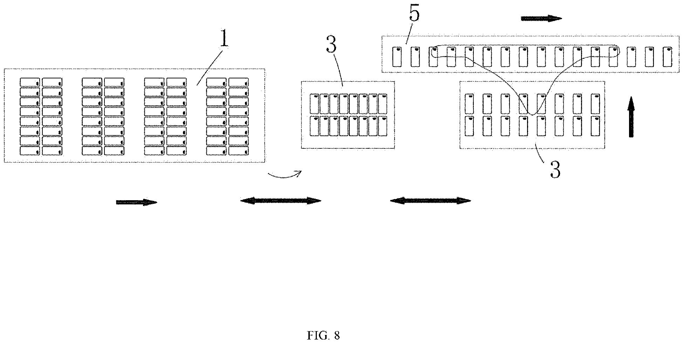

The synchronous spacing-changing conveyor device 3 has a following working principle: As shown in FIG. 6 and FIG. 7, after blisters are placed onto the first tray 321 and the second tray 322, the first power source 361 drives the first transmission belt 351 to rotate. Since one of the first sliding seats 311 is connected to the first transmission belt 351, the first sliding seats 311 move on the first slideway 301. Likewise, the second power source 362 drives the second transmission belt 352 to rotate. Since one of the second sliding seats 312 is connected to the second transmission belt 352, the second sliding seats 312 move on the second slideway 302. The first sliding seats 311 are connected to the second sliding seats 312 through the cross-connecting rods 31, so all of the first sliding seats 311 and all of the second sliding seats 312 move. Meanwhile, by adjusting outputs of the power sources, a certain difference is kept between a transfer speed of the first transmission belt 351 and a transfer speed of the second transmission belt 352, and thus spacings between two adjacent ones of the first sliding seats 311 and the second sliding seats 312 change equidistantly, as shown in FIG. 8. The blisters have a same spacing as the following feeding grid conveyor device 5. After the blisters on the trays are taken away, the transmission belts move reversely, and the sliding seats are restored quickly for next receiving. The above process is repeated. With the synchronous spacing-changing conveyor device 3, the discharging grid conveyor device 1 of the preceding blister packaging machine can be matched with the feeding grid conveyor device 5 of the following cartoning machine, no matter how the specification of the discharging grid conveyor device changes.

For the blisters of different specifications, different trays are required. For the convenience of replacement of the trays to place the blisters of different specifications, as shown in FIG. 5, first supporting seat 331 is provided on the first sliding seat 311. The first tray 321 is provided on the first supporting seat 311. First locating pin 371 is provided on the first supporting seat 331. A first locating hole for allowing the first locating pin 371 to insert into is formed in the first tray 321. When the first tray 321 is replaced necessarily, the first locating pin 371 is pulled out, and the first tray 321 is taken down, which is very convenient. Likewise, a second supporting seat is provided on the second sliding seat 312. The second tray is provided on the second supporting seat. A second locating pin is provided on the second supporting seat. A second locating hole for allowing the second locating pin to insert into is formed in the second tray. When the second tray is replaced necessarily, the second locating pin is pulled out, and the second tray is taken down, which is very convenient.

To avoid rotation of the trays, first locating fixture 341 is provided on the first supporting seat 321. A first locating groove for allowing the first locating fixture 341 to enter is formed at a bottom of the first tray 321. The first supporting seat 321 is clamped onto the first locating fixture 341 through the first locating groove, thereby preventing the rotation of the first tray 321. Likewise, the second supporting seat is connected to a second locating fixture. A second locating groove for allowing the second locating fixture to enter is formed at a bottom of the second tray 322. The second tray 322 is clamped onto the second locating fixture through the second locating groove, thereby preventing the rotation of the second tray 322.

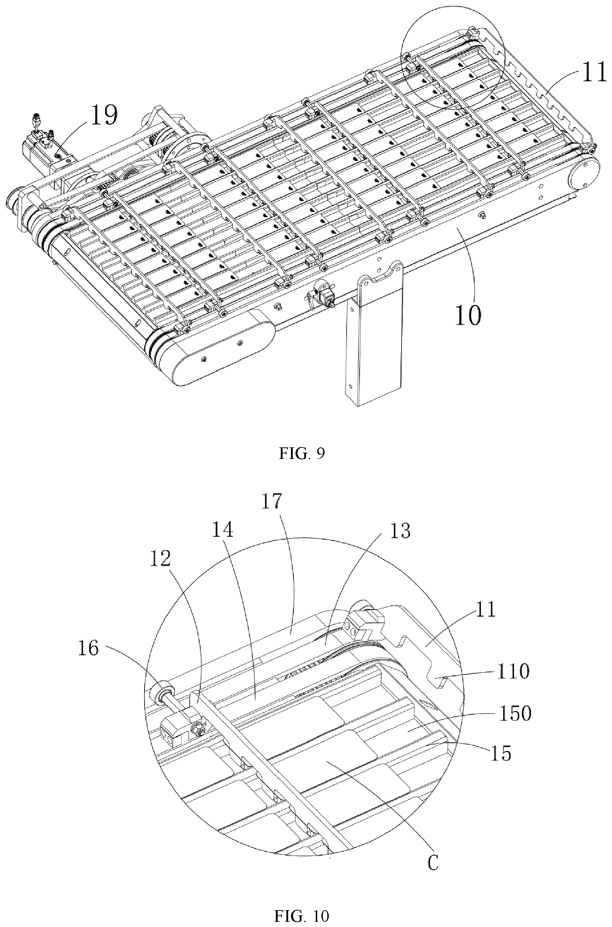

The discharging grid conveyor device 1 of the blister packaging machine may use a common grid conveyor device. However, the present disclosure provides a novel grid conveyor device. As shown in FIG. 9 and FIG. 10, the discharging grid conveyor device 1 includes conveyor rack 10, grid plate 15, first pushing plates 11, a first pushing plate transmission mechanism, and pushing power source 19. The grid plate 15 is provided with feeding channel 150. The first pushing plates 15 each are provided with pushing portion 110 capable of being located in the feeding channel 150. The first pushing plate transmission mechanism includes first conveyor belt 13. The first pushing plates 11 are connected to the first conveyor belt 13. The first conveyor belt 13 is in transmission connection with the pushing power source 19. During operation, trimmed blisters C fall into the feeding channel 150 of the grid plate 15. The pushing power source 19 drives the first conveyor belt 13 to move. Since the first pushing plates 11 are connected to the first conveyor belt 13, the first conveyor belt 13 drives the first pushing plates 11 to move, and the pushing portions 110 of the first pushing plates 11 push the blisters C to move forward.

For the blisters of different specifications, the grid spacing of the discharging grid conveyor device 1 can also be adjusted as required, so as to realize a most efficient output. The discharging grid conveyor device 1 in the present disclosure further includes second pushing plates 12 and a second pushing plate transmission mechanism. The second pushing plates 12 and the first pushing plates 11 are arranged at intervals. The second pushing plates 12 each are provided with a pushing portion located in the feeding channel 150. The second pushing plate transmission mechanism includes second conveyor belt 14. The second conveyor belt 14 is provided side by side with the first conveyor belt 13. The second pushing plates 12 are connected to the second conveyor belt 14. The second conveyor belt 14 is in transmission connection with the pushing power source 19. The second pushing plate 12 a same pushing principle as the first pushing plate 11, which is not repeated herein. When the grid spacing is adjusted necessarily, either or both of the first conveyor belt 13 and the second conveyor belt 14 are adjusted to change a spacing between the first pushing plate 11 and the second pushing plate 12, thereby conveying the blisters of the different specifications.

To support the pushing plates, an end of each of the second pushing plates 12 and the first pushing plates 11 is connected to roller 16. Roller walkway 17 for allowing the roller 16 to walk is provided on the conveyor rack 10. While the pushing plates move, the rollers 16 walk on the roller walkway 17 of the conveyor rack 10, thereby supporting the pushing plates and making the pushing plates walk more stably.

Finally, as shown in FIG. 8, the discharging vacuum nozzle 20 of the blister discharging transfer manipulator 2 is provided on a rotating power source, such that the blisters from the discharging grid conveyor device 1 to the synchronous spacing-changing conveyor device 3 are rotated by 90°, and the transverse blisters are placed longitudinally to meet requirements on cartoning positions. With the rotating power source, the discharging vacuum nozzle 20 is rotated by 90° in movement. The manipulator is rotated when there are many blisters in a longitudinal direction. In case of a small number of blisters in the longitudinal direction, the manipulator is unnecessarily rotated. In addition, the blister feeding transfer manipulator 4 can track blister suction and placement, such that the synchronous spacing-changing conveyor device 3 and the feeding grid conveyor device 5 realize continuous conveyance to improve the packaging efficiency.

## Claims

1. A synchronous spacing-changing conveyor device, comprising a base (30), wherein a first slideway (301) and a second slideway (302) are provided side by side on the base (30); a plurality of first sliding seats (311) are slidably provided on the first slideway (301); a first tray (321) is provided on each of the first sliding seats (311); a plurality of second sliding seats (312) are slidably provided on the second slideway (302); a second tray (322) is provided on each of the second sliding seats (312); one of the first sliding seats (311) is connected to a first transmission belt (351); the first transmission belt (351) is in transmission connection with a first power source (361); one of the second sliding seats (312) is connected to a second transmission belt (352); and the second transmission belt (352) is in transmission connection with a second power source (362); **characterized in that** the first sliding seat (311) is connected to a first hinge shaft with a rotation axis provided on the first sliding seat (311); two cross-connecting rods (31) are hinged crosswise on the first hinge shaft; the second sliding seat (312) is connected to a second hinge shaft with a rotation axis provided on the second sliding seat (312); two cross-connecting rods (31) are hinged crosswise on the second hinge shaft; cross-connecting rods (31) on two adjacent first sliding seat (311) and second sliding seat (312) are hinged crosswise in one-to-one correspondence.

2. The synchronous spacing-changing conveyor device according to claim 1, wherein a first supporting seat (331) is provided on the first sliding seat (311); the first tray (321) is provided on the first supporting seat (331); a first locating pin (371) is provided on the first supporting seat (331); a first locating hole for allowing the first locating pin (371) to insert into is formed in the first tray (321); a second supporting seat is provided on the second sliding seat (312); the second tray is provided on the second supporting seat; a second locating pin is provided on the second supporting seat; and a second locating hole for allowing the second locating pin to insert into is formed in the second tray.

3. The synchronous spacing-changing conveyor device according to claim 2, wherein a first locating fixture (341) is provided on the first supporting seat (331); a first locating groove for allowing the first locating fixture (341) to enter is formed at a bottom of the first tray (321); a second locating fixture is provided on the second supporting seat; and a second locating groove for allowing the second locating fixture to enter is formed at a bottom of the second tray.

4. A blister cartoning integrated machine, comprising a blister packaging machine and a cartoning machine, wherein the blister packaging machine comprises a discharging grid conveyor device (1) for conveying packaged blisters out through the discharging grid conveyor device (1); the synchronous spacing-changing conveyor device (3) according to any one of claims 1 to 3 is provided in front of the discharging grid conveyor device (1); a blister discharging transfer manipulator (2) for transferring blisters on the discharging grid conveyor device (1) to the synchronous spacing-changing conveyor device (3) is provided above the discharging grid conveyor device (1); the blister discharging transfer manipulator (2) comprises a discharging vacuum nozzle (20); the cartoning machine comprises a feeding grid conveyor device (5) for transferring packaged blisters from the synchronous spacing-changing conveyor device (3) to the cartoning station of the cartoning machine for cartoning; the synchronous spacing-changing conveyor device (3) is provided side by side with the feeding grid conveyor device (5); a blister feeding transfer manipulator (4) for transferring blisters on the synchronous spacing-changing conveyor device (3) to the feeding grid conveyor device (5) is provided above the feeding grid conveyor device (5); and the blister feeding transfer manipulator (4) comprises a feeding vacuum nozzle (40).

5. The blister cartoning integrated machine according to claim 4, wherein the discharging grid conveyor device (1) comprises a conveyor rack (10), a grid plate (15), first pushing plates (11), a first pushing plate transmission mechanism, and a pushing power source (19); the grid plate (15) is provided with a feeding channel (150); the first pushing plates (11) each are provided with a pushing portion (110) capable of being located in the feeding channel (150); the first pushing plate transmission mechanism comprises a first conveyor belt (13); the first pushing plates (11) are connected to the first conveyor belt (13); and the first conveyor belt (13) is in transmission connection with the pushing power source (19), such that during operation blisters (C) fall into the feeding channel (150) of the grid plate (15), the pushing power source (19) is configured to drive the first conveyor belt (13) to move, the first conveyor belt (13) is configured to drive the first pushing plates (11) to move, and the pushing portions (110) of the first pushing plates (11) are configured to push the blisters (C) in the feeding channel (150) of the grid plate (15) to move forward.

6. The blister cartoning integrated machine according to claim 5, wherein the discharging grid conveyor device (1) comprises second pushing plates (12) and a second pushing plate transmission mechanism; the second pushing plates (12) and the first pushing plates (11) are arranged at intervals; the second pushing plates (12) each are provided with a pushing portion capable of being located in the feeding channel (150); the second pushing plate transmission mechanism comprises a second conveyor belt (14); the second conveyor belt (14) is provided side by side with the first conveyor belt (13); the second pushing plates (12) are connected to the second conveyor belt (14); and the second conveyor belt (14) is in transmission connection with the pushing power source (19), such that during operation blisters (C) fall into the feeding channel (150) of the grid plate (15), the pushing power source (19) is configured to drive the second conveyor belt (14) to move, the second conveyor belt (14) is configured to drive the second pushing plates (12) to move, and the pushing portions of the second pushing plates (12) are configured to push the blisters (C) in the feeding channel (150) of the grid plate (15) to move forward.

7. The blister cartoning integrated machine according to claim 6, wherein an end of each of the second pushing plates (12) and the first pushing plates (11) is connected to a roller (16), and a roller walkway (17) for allowing the roller (16) to move is provided on the conveyor rack (10), such that the rollers (16) are configured to move on the roller walkway (17) while the pushing plates (11, 12) move.

8. The blister cartoning integrated machine according to claim 4, wherein the discharging vacuum nozzle (20) of the blister discharging transfer manipulator (2) is provided on a rotating power source.

9. The blister cartoning integrated machine according to claim 4, wherein the blister feeding transfer manipulator (4) is configured to track blister suction and placement for realizing continuous conveyance between the synchronous spacing-changing conveyor device (3) and the feeding grid conveyor device (5).

## Patentansprüche

1. Eine synchrone Abstandänderungs-Fördervorrichtung, bestehend aus einer Basis (30), wobei eine erste Gleitbahn (301) und eine zweite Gleitbahn (302) nebeneinander auf der Basis (30) angeordnet sind; mehrere erste Gleitsitze (311) sind gleitend auf der ersten Gleitbahn (301) angeordnet; ein erstes Tablett (321) ist auf jedem der ersten Gleitsitze (311) angebracht; mehrere zweite Gleitsitze (312) sind gleitend auf der zweiten Gleitbahn (302) angeordnet; ein zweites Tablett (322) ist auf jedem der zweiten Gleitsitze (312) angebracht; einer der ersten Gleitsitze (311) ist mit einem ersten Transmissionsriemen (351) verbunden; der erste Transmissionsriemen (351) steht in Übertragungsverbindung mit einer ersten Energiequelle (361); einer der zweiten Gleitsitze (312) ist mit einem zweiten Transmissionsriemen (352) verbunden; und der zweite Transmissionsriemen (352) steht in Übertragungsverbindung mit einer zweiten Energiequelle (362); **dadurch gekennzeichnet, dass** der erste Gleitsitz (311) verbunden ist mit einer ersten Scharnierwelle mit Drehachse, die an dem ersten Gleitsitz (311) angebracht ist; zwei Querverbindungsstangen (31) sind kreuzweise an der ersten Scharnierwelle angebracht; der zweite Gleitsitz (312) ist verbunden mit einer zweiten Scharnierwelle mit Drehachse, die an dem zweiten Gleitsitz (312) angebracht ist; zwei Querverbindungsstangen (31) sind kreuzweise an der zweiten Scharnierwelle angebracht; Querverbindungsstangen (31) sind kreuzweise an einem benachbarten ersten Gleitsitz (311) und zweiten Gleitsitz (312) in eins-zu-eins-Entsprechung angebracht.

2. Die synchrone Abstandänderungs-Fördervorrichtung nach Anspruch 1, wobei ein erster Stützsitz (331) auf dem ersten Gleitsitz (311) angebracht ist; das erste Tablett (321) ist auf dem ersten Stützsitz (331) angebracht; ein erster Befestigungsstift (371) ist auf dem ersten Stützsitz (331) angebracht; ein erstes Befestigungsloch, in das der erste Befestigungsstift (371) eingeführt werden kann, ist in dem ersten Tablett (321) ausgebildet; ein zweiter Stützsitz ist auf dem zweiten Gleitsitz (312) angebracht; das zweite Tablett ist auf dem zweiten Stützsitz angebracht; ein zweiter Befestigungsstift ist auf dem zweiten Stützsitz angebracht; und ein zweites Befestigungsloch, in das der zweite Befestigungsstift eingeführt werden kann, ist in dem zweiten Tablett ausgebildet.

3. Die synchrone Abstandänderungs-Fördervorrichtung nach Anspruch 2, wobei eine erste Positioniervorrichtung (341) auf dem ersten Stützsitz (331) angebracht ist; eine erste Positioniernut, in die die erste Positioniervorrichtung (341) eintreten kann, ist am Boden des ersten Tabletts (321) ausgebildet; eine zweite Positioniervorrichtung ist auf dem zweiten Stützsitz angebracht; und eine zweite Positioniernut, in die die zweite Positioniervorrichtung eintreten kann, ist am Boden des zweiten Tabletts ausgebildet.

4. Eine integrierte Blister-Kartoniermaschine, bestehend aus einer Blister-Verpackungsmaschine und einer Kartoniermaschine, wobei die Blister-Verpackungsmaschine eine Austragsgitter-Fördervorrichtung (1) zum Befördern von verpackten Blistern durch die Austragsgitter-Fördervorrichtung (1) umfasst; die synchrone Abstandänderungs-Fördervorrichtung (3) nach einem der Ansprüche 1 bis 3 ist vor der Austragsgitter-Fördervorrichtung (1) angeordnet; ein Blisterabgabe-Transfermanipulator (2) zum Übergeben von Blistern auf der Austragsgitter-Fördervorrichtung (1) an die synchrone Abstandänderungs-Fördervorrichtung (3) ist oberhalb der Austragsgitter-Fördervorrichtung (1) angebracht; der Blisterabgabe-Transfermanipulator (2) umfasst eine Abgabe-Vakuumdüse (20); die Kartoniermaschine umfasst eine Zuführgitter-Fördervorrichtung (5) zum Überführen verpackter Blister von der synchronen Abstandänderungs-Fördervorrichtung (3) zur Kartonierstation der Kartoniermaschine zum Kartonieren; die synchrone Abstandänderungs-Fördervorrichtung (3) ist neben der Zuführgitter-Fördervorrichtung (5) angeordnet; ein Blisterzufuhr-Transfermanipulator (4) zum Übergeben von Blistern auf der synchronen Abstandänderungs-Fördervorrichtung (3) an die Zuführgitter-Fördervorrichtung (5) ist oberhalb der Zuführgitter-Fördervorrichtung (5) angebracht; und der Blisterzufuhr-Transfermanipulator (4) umfasst eine Zufuhr-Vakuumdüse (40).

5. Die integrierte Blister-Kartoniermaschine nach Anspruch 4, wobei die Austragsgitter-Fördervorrichtung (1) ein Fördergestell (10), eine Gitterplatte (15), erste Schiebeplatten (11), einen ersten Schiebeplatten-Übertragungsmechanismus und eine Schiebe-Energiequelle (19) umfasst; die Gitterplatte (15) ist mit einem Zuführkanal (150) versehen; die ersten Schiebeplatten (11) sind jeweils mit einem Schiebeteil (110) versehen, das in den Zuführkanal (150) eingesetzt werden kann; der erste Schiebeplatten-Übertragungsmechanismus umfasst ein erstes Förderband (13); die ersten Schiebeplatten (11) sind mit dem ersten Förderband (13) verbunden; und das erste Förderband (13) steht in Übertragungsverbindung mit der Schiebe-Energiequelle (19), so dass während des Betriebs Blister (C) in den Zuführkanal (150) der Gitterplatte (15) fallen, die Schiebe-Energiequelle (19) so konfiguriert ist, dass sie das erste Förderband (13) antreibt, das erste Förderband (13) so konfiguriert ist, dass es die ersten Schiebeplatten (11) in Bewegung versetzt, und die Schiebeteile (110) der ersten Schiebeplatten (11) so konfiguriert sind, dass sie die Blister (C) im Zuführkanal (150) der Gitterplatte (15) vorwärts schieben.

6. Die integrierte Blister-Kartoniermaschine nach Anspruch 5, wobei die Austragsgitter-Fördervorrichtung (1) zweite Schiebeplatten (12) und einen zweiten Schiebeplatten-Übertragungsmechanismus umfasst; die zweiten Schiebeplatten (12) und die ersten Schiebeplatten (11) sind in Intervallen angeordnet; die zweiten Schiebeplatten (12) sind jeweils mit einem Schiebeteil versehen, das in den Zuführkanal (150) eingebracht werden kann; der zweite Schiebeplatten-Übertragungsmechanismus umfasst ein zweites Förderband (14); das zweite Förderband (14) ist parallel zum ersten Förderband (13) angeordnet; die zweiten Schiebeplatten (12) sind mit dem zweiten Förderband (14) verbunden; und das zweite Förderband (14) steht in Übertragungsverbindung mit der Schiebe-Energiequelle (19); so dass während des Betriebs Blister (C) in den Zuführkanal (150) der Gitterplatte (15) fallen, die Schiebe-Energiequelle (19) so konfiguriert ist, dass sie das zweite Förderband (14) antreibt, das zweite Förderband (14) so konfiguriert ist, dass es die zweiten Schiebeplatten (12) in Bewegung versetzt, und die Schiebeteile der zweiten Schiebeplatten (12) so konfiguriert sind, dass sie die Blister (C) im Zuführkanal (150) der Gitterplatte (15) vorwärts schieben.

7. Die integrierte Blister-Kartoniermaschine nach Anspruch 6, wobei ein Ende jeder der zweiten Schiebeplatten (12) und der ersten Schiebeplatten (11) mit einer Rolle (16) verbunden ist, und ein Rollenweg (17), der die Bewegung der Rolle (16) ermöglicht, an dem Fördergestell (10) angeordnet ist, wobei die Rollen (16) so konfiguriert sind, dass sie auf dem Rollenweg (17) laufen, während die Schiebeplatten (11, 12) sich bewegen.

8. Die integrierte Blister-Kartoniermaschine nach Anspruch 4, wobei die Abgabe-Vakuumdüse (20) des Blisterabgabe-Transfermanipulators (2) an einer rotierenden Energiequelle angebracht ist.

9. Die integrierte Blister-Kartoniermaschine nach Anspruch 4, wobei der Blisterzufuhr-Transfermanipulator (4) so konfiguriert ist, dass er die Ansaugung und Platzierung der Blister verfolgt, um eine kontinuierliche Förderung zwischen der synchronen Abstandänderungs-Fördervorrichtung (3) und der Zuführgitter-Fördervorrichtung (5) zu ermöglichen.

## Revendications

1. Convoyeur synchrone à écartement variable, comprenant un socle (30), **caractérisé en ce qu'**une première glissière (301) et une deuxième glissière (302) étant juxtaposée au socle (30) ; plusieurs premiers logements coulissants (311) étant disposés de manière coulissante sur la première glissière (301) ; un premier plateau (321) étant disposé sur chacun des premiers logements coulissants (311) ; plusieurs deuxièmes logements coulissants (312) étant coulissants sur la deuxième glissière (302) ; un deuxième plateau (322) étant positionné sur chacun des deuxièmes logements coulissants (312) ; l'un des premiers logements coulissants (311) étant relié à une première courroie de transmission (351) ; la première courroie de transmission (351) étant reliée par transmission à une première alimentation (361) ; l'un des deuxièmes logements coulissants (312) étant relié à une deuxième courroie de transmission (352) ; la deuxième courroie de transmission (352) étant reliée par transmission à une deuxième alimentation (362) ; et **caractérisé en ce que** le premier logement coulissant (311) étant relié à un premier arbre d'articulation avec un axe rotatif prévu sur le premier logement coulissant (311) ; deux bielles transversales (31) étant transversalement articulées sur le premier arbre d'articulation ; le deuxième logement coulissant (312) étant relié à un deuxième arbre d'articulation avec un axe rotatif prévu sur le deuxième logement coulissant (312) ; deux bielles transversales (31) étant transversalement articulées sur le deuxième arbre d'articulation ; les bielles transversales (31) sur deux premiers logements coulissants (311) et sur deux deuxièmes logements coulissants (312) adjacents étant transversalement articulées l'une par rapport à l'autre.

2. Convoyeur synchrone à écartement variable selon la revendication 1, **caractérisé en ce qu'**un premier logement d'appui (331) étant prévu sur le premier logement coulissant (311) ; le premier plateau (321) étant prévu sur le premier logement d'appui (331) ; une première goupille de positionnement (371) étant prévue sur le premier logement d'appui (331) ; un premier trou de positionnement étant formé dans le premier plateau (321) pour permettre une insertion de la première goupille de positionnement (371) ; un deuxième logement d'appui étant prévu sur le deuxième siège coulissant (312) ; le deuxième plateau étant prévu sur le deuxième logement d'appui ; une deuxième goupille de positionnement étant prévue sur le deuxième logement d'appui ; et un deuxième trou de positionnement étant formé dans le deuxième plateau pour permettre une insertion de la deuxième goupille de positionnement.

3. Convoyeur synchrone à écartement variable selon la revendication 2, **caractérisé en ce qu'**une pince de positionnement (341) étant prévue sur le premier logement d'appui (331) ; une première rainure de positionnement permettant la pénétration de la première pince de positionnement (341) étant formée au fond du premier plateau (321) ; une deuxième pince de positionnement étant prévue sur le deuxième logement d'appui ; et une deuxième rainure de positionnement permettant la pénétration de la deuxième pince de positionnement étant formée au fond du deuxième plateau.

4. Encartonneuse intégrale sous blister, comprenant une emballeuse sous blister et une encartonneuse, **caractérisée en ce que** l'emballeuse sous blister comprenant un convoyeur à grille de décharge (1) pour transporter les blisters emballés à travers le convoyeur à grille de décharge (1) ; le convoyeur synchrone à écartement variable (3) selon l'une des revendications 1 à 3 étant positionné devant le convoyeur à grille de décharge (1) ; un manipulateur de transfert de décharge sous blister (2) permettant de transférer les blisters sur le convoyeur à grille de décharge (1) vers le convoyeur synchrone à écartement variable (3) au-dessus du convoyeur à grille de décharge (1) ; le manipulateur de transfert de décharge sous blister (2) comprenant une buse d'aspiration de décharge (20) ; l'encartonneuse comprenant un convoyeur à grille d'alimentation (5) destiné à transférer les blisters emballés du convoyeur synchrone à écartement variable (3) à la station d'encartonneuse aux fins de l'encartonnage ; le convoyeur synchrone à écartement variable (3) étant juxtaposé au convoyeur à grille d'alimentation (5) ; un manipulateur de transfert d'alimentation sous blister (4) destiné à transférer les blisters sur le convoyeur synchrone à écartement variable (3) vers le convoyeur à grille d'alimentation (5) étant disposé au-dessus du convoyeur à grille d'alimentation (5) ; et le manipulateur de transfert d'alimentation sous blister (4) comprenant une buse d'aspiration d'alimentation (40).

5. Encartonneuse intégrale sous blister selon la revendication 4, **caractérisée en ce que** le convoyeur à grille de décharge (1) comprenant un bâti de convoyeur (10), une plaque à grille (15), des premières plaques de poussée (11), un premier mécanisme de transmission de plaque de poussée, et une alimentation de poussée (19) ; la plaque à grille (15) étant pourvue d'un passage d'alimentation (150) ; les premières plaques de poussée (11) étant pourvues chacune d'une partie de poussée (110) susceptible de se trouver dans le passage d'alimentation (150) ; le premier mécanisme de transmission de plaque de poussée étant pourvu d'une première bande transporteuse (13) ; les premières plaques de poussée (11) étant reliées à la première courroie transporteuse (13) ; et la première courroie transporteuse (13) étant reliée par transmission à l'alimentation de poussée (19) ; ainsi, au cours du fonctionnement, les blisters (C) tombant dans le passage d'alimentation (150) de la plaque à grille (15) ; l'alimentation de poussée (19) étant configurée pour faire avancer la première courroie transporteuse (13) ; la première courroie transporteuse (13) étant configurée pour faire avancer les premières plaques de poussée (11) ; et les parties de poussée (110) des premières plaques de poussée (11) étant configurées pour faire avancer les blisters (C) dans le passage d'alimentation (150) de la plaque à grille (15).

6. Encartonneuse intégrale sous blister selon la revendication 5, **caractérisée en ce que** le convoyeur à grille de décharge (1) comprenant des deuxièmes plaques de poussée (12) et un deuxième mécanisme de transmission des plaques de poussée ; les deuxièmes plaques de poussée (12) et les premières plaques de poussée (11) étant disposées à intervalles ; les deuxièmes plaques de poussée (12) étant chacune pourvues d'une partie de poussée pouvant être positionnée dans le passage d'amenée (150) ; le mécanisme de transmission de la deuxième plaque de poussée comprenant une deuxième courroie transporteuse (14) ; la deuxième courroie transporteuse (14) étant juxtaposée à la première courroie transporteuse (13) ; les deuxièmes plaques de poussée (12) étant reliées à la deuxième courroie transporteuse (14) ; et la deuxième bande transporteuse (14) étant reliée par transmission à l'alimentation de poussée (19) ; ainsi, au cours de fonctionnement, les blisters (C) tombant dans le passage d'alimentation (150) de la plaque à grille (15), l'alimentation de poussée (19) étant configurée pour faire avancer la deuxième bande transporteuse (14), la deuxième courroie transporteuse (14) étant configurée pour faire avancer les deuxièmes plaques de poussée (12) ; et les parties poussantes des deuxièmes plaques de poussée (12) étant configurées pour faire avancer les blisters (C) dans le passage d'alimentation (150) de la plaque à grille (15).

7. Encartonneuse intégrale sous blister selon la revendication 6, **caractérisée en ce qu'**une extrémité de chacune des deuxièmes plaques de poussée (12) et des premières plaques de poussée (11) étant reliée à un rouleau (16), et un chemin de roulement (17) permettant au rouleau (16) de se déplacer étant prévu sur le bâti du transporteur (10), ainsi, les rouleaux (16) étant configurés pour le déplacement sur le chemin de roulement (17) au cours du déplacement des plaques de poussée (11, 12).

8. Encartonneuse intégrale sous blister selon la revendication 4, **caractérisée en ce que** la buse de décharge à vide (20) du manipulateur de transfert de décharge de blisters (2) est pourvue d'une alimentation rotative.

9. Encartonneuse intégrale sous blister selon la revendication 4, **caractérisée en ce que** le manipulateur de transfert d'alimentation sous blister (4) est configuré pour suivre l'aspiration et la mise en place des blisters afin de réaliser un transport continu entre le convoyeur synchrone à écartement variable (3) et le convoyeur à grille d'alimentation (5).
